# EUROPEAN PATENT APPLICATION

(11) **EP 4 686 176 A1**
(43) Date of publication of application: **28.01.2026**
(21) Application number: 24860243.5
(22) Date of filing: 07.08.2024
(51) Int. Cl.: H04L 67/12, H04L 41/12, H04L 67/303, H04W 60/00, H04B 17/318, G16Y 10/75, G16Y 40/20

(54) **ELECTRONIC DEVICE AND METHOD FOR CONTROLLING ELECTRONIC DEVICE**

(30) Priority: 01.09.2023 KR 20230116452
(71) Applicant: Samsung Electronics Co., Ltd., Suwon-si, Gyeonggi-do 16677 (KR)
(72) Inventor: HAHM, Seongil, Suwon-si Gyeonggi-do 16677 (KR); KANG, Pilseop, Suwon-si Gyeonggi-do 16677 (KR)
(74) Representative: Gulde & Partner
(86) International application number: PCT/KR2024/011740
(87) International publication number: WO 2025/048322

(57) **Abstract**

An electronic device may include at least one processor configured to: configure an ad hoc network including the electronic device, a target device, and a transmitting device, based on a request to add an Internet of Things (IoT) device being received; acquire first information on a first change pattern of a first signal; receive second information on a second change pattern of a second signal transmitted to the target device by the transmitting device, from the target device through the communication interface; acquire a value indicating a similarity between the first change pattern and the second change pattern based on the first information and the second information; and identify that the target device is in a same space as the electronic device and register the target device as the IoT device, based on the value indicating the similarity being greater than or equal to a threshold value.

## Description

### [TECHNICAL FIELD]

The present disclosure relates to an electronic device and a controlling method of an electronic device. More specifically, the disclosure relates to an electronic device capable of determining whether to register a target device as a device constituting an IoT network and a controlling method thereof.

### [BACKGROUND ART]

Recently, technology related to Internet of Things (IoT) has developed rapidly. In particular, in recent years, research is continuing to reduce user involvement for registering a device to configure an IoT network (i.e. the onboarding process).

In the related art, there are various technologies of identifying that devices registered in the IoT network and devices not registered in the IoT network are located in the same space by transmitting and receiving wireless signals, such as sound waves of non-audible frequencies, infrared signals, Wi-Fi signals, Bluetooth signals, etc., between the devices. The networks can thereby register the devices not registered in the IoT network based on the identification.

However, in the related art, due to the nature of the wireless signals, a multipath may occur due to reflection, diffraction, etc., and accordingly, there is a problem that signal reception strength may not be proportional to distance. In addition, when there are moving objects (people, animals, electronic products, etc.) around the devices, due to a multipath fading phenomenon in which the signal strength and phase change as the signal is transmitted along the multipath, the signal strength at a point may change over time.

Due to the characteristics of wireless signals described above, the related art has limitations in that it is difficult to simultaneously achieve both usability and security while registering the devices for the IoT network configuration.

Meanwhile, there is related art that uses a method of supporting short-range wireless communication protocols that operate through radio waves at high frequencies, such as ultra-wideband (UWB). However, this related art can only be applied to devices equipped with separate hardware.

### [DISCLOSURE]

One or more embodiments of the present disclosure can provide an electronic device capable of efficiently performing a process of registering a device for configuring an IoT network and a controlling method thereof.

According to one or more example embodiments, an electronic device may include: a communication interface; a memory configured to store at least one instruction; and at least one processor configured to execute the at least one instruction to: control the communication interface to configure an ad hoc network including the electronic device, a target device, and a transmitting device, based on a request to add an Internet of Things (IoT) device being received; receive a first signal from the transmitting device through the communication interface based on the ad hoc network being configured; acquire first information on a first change pattern of the first signal; receive second information on a second change pattern of a second signal transmitted to the target device by the transmitting device, from the target device through the communication interface; acquire a value indicating a similarity between the first change pattern and the second change pattern based on the first information and the second information; and identify that the target device is in a same space as the electronic device and register the target device as the IoT device, based on the value indicating the similarity being greater than or equal to a threshold value.

The first change pattern may indicates a change in signal by an object between the transmitting device and the electronic device, and the second change pattern may indicate the change in signal by the object between the transmitting device and the target device.

The electronic device may be pre-registered as the IoT device, and the transmitting device may be an access point (AP) connected to the electronic device.

The first information and the second information may include at least one of reception strengths of the first signal and the second signal or a multipath of the first signal and the second signal.

The at least one processor may be further configured to execute the at least one instruction to identify the target device as participating in the ad hoc network, based on a registration request being received from the target device through the communication interface, and the ad hoc network may be configured by controlling the communication interface to transmit a request for configuration of the ad hoc network to the target device and the transmitting device.

The at least one processor may be further configured to execute the at least one instruction to acquire the first information by analyzing the first change pattern based on at least one of a type of the transmitting device or a type of the electronic device.

The at least one processor may be further configured to execute the at least one instruction to control the communication interface to transmit information on the target device to a server that provides a platform to register the target device as the IoT device.

The at least one processor may be further configured to execute the at least one instruction to: based on the ad hoc network being configured, periodically receive the first signal from the transmitting device through the communication interface for a preset reception period; and transmit a request not to transmit the first signal to the transmitting device based on it being identified that the target device is in the same space as the electronic device before the preset reception period.

The at least one processor may be further configured to execute the at least one instruction to: periodically acquire the first information on the first change pattern; periodically receive the second information on the second change pattern periodically transmitted to the target device by the transmitting device, from the target device through the communication interface; periodically acquire the value indicating the similarity between the first change pattern and the second change pattern based on the first information and the second information; increase a score indicating that the target device is in the same space as the electronic device based on each cycle that the value indicating the similarity is greater than or equal to the threshold value; and identify that the target device is in the same space as the electronic device and register the target device as the IoT device, based on the score being greater than or equal to a threshold score.

The at least one processor may be further configured to execute the at least one instruction to input the first information and the second information to a trained neural network model to acquire the value indicating the similarity between the first change pattern and the second change pattern.

According to one or more example embodiments, a controlling method of an electronic device, may include: configuring an ad hoc network including the electronic device, a target device, and a transmitting device when a request to add an Internet of Things (IoT) device is received; receiving a first signal from the transmitting device based on the ad hoc network being configured; acquiring first information on a first change pattern of the first signal; receiving second information on a second change pattern of a second signal transmitted to the target device by the transmitting device, from the target device; acquiring a value indicating a similarity between the first change pattern and the second change pattern based on the first information and the second information; and identifying that the target device is in a same space as the electronic device and registering the target device as the IoT device, based on the value indicating the similarity being greater than or equal to a threshold value.

The first change pattern may indicate a change in signal by an object between the transmitting device and the electronic device, and the second change pattern may indicate the change in signal by the object between the transmitting device and the target device.

The electronic device may be pre-registered as the IoT device, and the transmitting device may be an access point (AP) connected to the electronic device.

The first information and the second information may include at least one of reception strengths of the first signal and the second signal or a multipath of the first signal and the second signal.

The configuring of the ad hoc network may include: identifying the target device as a device that participates in the ad hoc network based on a registration request being received from the target device; and configuring the ad hoc network to transmit a request for configuration of the ad hoc network to the target device and the transmitting device.

### [DESCRIPTION OF DRAWINGS]

The above and other aspects, features, and advantages of certain embodiments of the present disclosure will be more apparent from the following description taken in conjunction with the accompanying drawings, in which:
FIG. 1 is a diagram illustrating an electronic device, a target device, and a transmitting device according to one or more embodiments of the present disclosure;
FIG. 2 is a flowchart of a method of controlling an electronic device according to one or more embodiments of the present disclosure;
FIG. 3 is a diagram showing one or more embodiments related to a case where an object exists in a signal transmission path;
FIG. 4 is a flowchart showing one or more embodiments in which the electronic device identifies twice or more whether the target device is in the same space as the electronic device;
FIG. 5 is a diagram schematically illustrating a configuration of the electronic device according to one or more embodiments of the present disclosure;
FIG. 6 is a diagram illustrating in detail the configuration of the electronic device according to one or more embodiments of the present disclosure;
FIG. 7 is a diagram showing one or more embodiments related to one device transmitting a signal to two different devices;
FIG. 8 is a diagram showing one or more embodiments related to one device transmitting a signal to two different devices;
FIG. 9 is a diagram showing one or more embodiments related to transmitting signals from two different devices to one device;
FIG. 10 is a diagram showing one or more embodiments related to transmitting signals from two different devices to one device;
FIG. 11 is a diagram showing various embodiments related to transmitting signals from two different devices to one device;
FIG. 12 is a diagram showing one or more embodiments related to determining whether to register the target device in the IoT network by having four different devices participate in an ad hoc network;
FIG. 13 is a diagram showing one or more embodiments related to determining whether to register the target device in the IoT network by having four different devices participate in an ad hoc network;
FIG. 14 is a diagram showing one or more embodiments related to transmitting signals from two different devices to two different devices; and
FIG. 15 is a diagram showing one or more embodiments related to transmitting signals from two different devices to two different devices.

### [MODE FOR INVENTION]

Since the present disclosure may be variously modified and have several exemplary embodiments, specific exemplary embodiments of the present disclosure will be illustrated in the drawings and be described in detail in the detailed description. However, it is to be understood that the disclosure are not limited to specific exemplary embodiments, but include all modifications, equivalents, and substitutions according to exemplary embodiments of the disclosure. Throughout the accompanying drawings, similar components will be denoted by similar reference numerals.

In describing the disclosure, when it is decided that a detailed description for the known functions or configurations related to the disclosure may unnecessarily obscure the gist of the disclosure, the detailed description therefor will be omitted.

In addition, the following exemplary embodiments may be modified in several different forms, and the scope and spirit of the disclosure are not limited to the following exemplary embodiments. Rather, these exemplary embodiments make the disclosure thorough and complete, and are provided to completely transfer the spirit of the disclosure to those skilled in the art.

Terms used in the disclosure are used only to describe specific exemplary embodiments rather than limiting the scope of the disclosure. Singular forms are intended to include plural forms unless the context clearly indicates otherwise.

In the present disclosure, an expression "have", "may have", "include", "may include", or the like, indicates existence of a corresponding feature (for example, a numerical value, a function, an operation, a component such as a part, or the like), and does not exclude existence of an additional feature.

In the present disclosure, an expression "A or B," "at least one of A and/or B," "one or more of A and/or B," or the like, may include all possible combinations of items enumerated together. For example, "A or B," "at least one of A and B," or "at least one of A or B" may indicate all of 1) a case in which at least one A is included, 2) a case in which at least one B is included, or 3) a case in which both of at least one A and at least one B are included.

Expressions "first", "second", "1st" or "2nd" or the like, used in the present disclosure may indicate various components regardless of a sequence and/or importance of the components, will be used only in order to distinguish one component from the other components, and do not limit the corresponding components.

When it is mentioned that any component (for example: a first component) is (operatively or communicatively) coupled with/to or is connected to another component (for example: a second component), it is to be understood that any component is directly coupled to another component or may be coupled to another component through the other component (for example: a third component).

On the other hand, when it is mentioned that any component (for example, a first component) is "directly coupled" or "directly connected" to another component (for example, a second component), it is to be understood that the other component (for example, a third component) is not present between any component and another component.

An expression "~configured (or set) to" used in the disclosure may be replaced by an expression "suitable for," "having the capacity to," "~designed to," "~adapted to," "~made to," or "~capable of" depending on a situation. A term "~configured (or set) to" may not necessarily mean "specifically designed to" in hardware.

Instead, an expression "~an apparatus configured to" may mean that the apparatus "is capable of" together with other apparatuses or components. For example, a "processor configured (or set) to perform A, B, and C" may mean a dedicated processor (for example, an embedded processor) for performing the corresponding operations or a generic-purpose processor (for example, a central processing unit (CPU) or an application processor) that may perform the corresponding operations by executing one or more software programs stored in a memory device.

In exemplary embodiments, a "module" or a "unit" may perform at least one function or operation, and be implemented by hardware or software or be implemented by a combination of hardware and software. In addition, a plurality of "modules" or a plurality of "~ers/ors" may be integrated in at least one module and be implemented by at least one processor except for a 'module' or an '~er/or' that needs to be implemented by specific hardware.

Meanwhile, various elements and regions in the drawings are schematically illustrated. Therefore, the spirit of the disclosure is not limited by relatively sizes or intervals illustrated in the accompanying drawings.

Hereinafter, embodiments of the disclosure will be described in detail with reference to the accompanying drawings so that those skilled in the art to which the disclosure pertains may easily practice the disclosure.

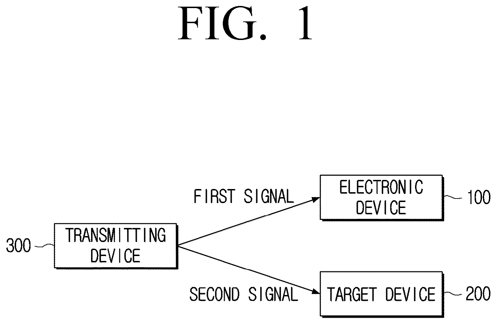

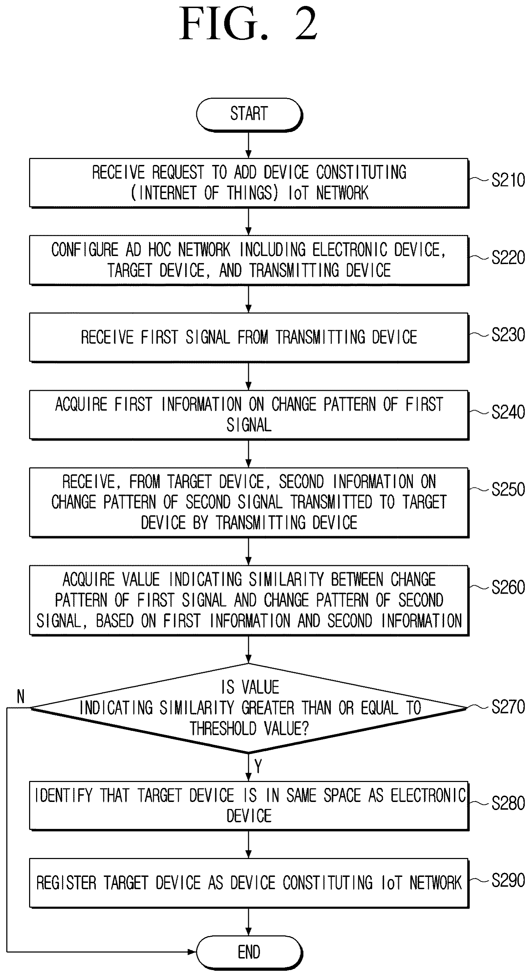

FIG. 1 is a diagram illustrating an electronic device 100, a target device 200, and a transmitting device 300 according to one or more embodiments of the present disclosure, and FIG. 2 is a diagram a controlling method of an electronic device 100 according to one or more embodiments of the present disclosure. Hereinafter, it will be described with reference to FIGS. 1 and 2 together.

As illustrated in FIG. 1, the system according to the present disclosure may include the electronic device 100, the target device 200, and the transmitting device 300.

The 'electronic device 100' refers to a device that may determine whether to register the target device 200 as a device constituting an Internet of Things (IoT) network. Specifically, the electronic device 100 may be a device that is pre-registered as a device constituting an IoT network, and may identify whether it is appropriate to register the target device 200 as the device constituting the IoT network.

The 'process of registering the target device 200 as the device constituting the IoT network' may be referred to as so-called 'onboarding' (or easy setup, commissioning, etc.), and the electronic device 100 may be said to be a device that performs the role of a 'helper' in the sense that it is a device that assists an onboarding process of the target device 200.

The 'target device 200' refers to a device that may be registered as the device constituting the IoT network (i.e. the "IoT device"). In other words, the target device 200 is the device that has not been registered as the device constituting the IoT network, and refers to a candidate device that is likely to be registered as the device constituting the IoT network.

The 'transmitting device (300)' refers to a device that may transmit (send) a signal to another device. Specifically, the transmitting device 300 may transmit a signal to the electronic device 100 and the target device 200. The transmitting device 300 is a device that constitutes the IoT network (IoT device) and may be a registered device or an unregistered device.

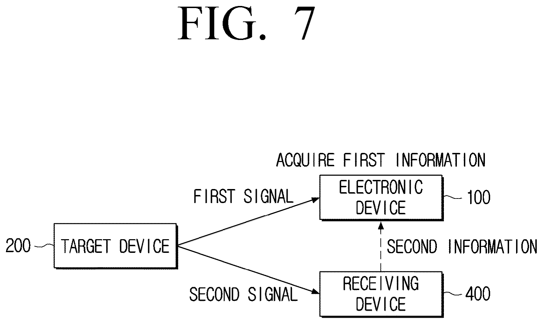

Although the roles of the electronic device 100, the target device 200, and the transmitting device 300 have been defined above, this is only an example, and as will be described later with reference to FIGS. 7 to 15, according to one or more embodiments, the roles of the electronic device 100, the target device 200, and the transmitting device 300 may differ from the roles defined above, and additional roles other than those defined above may be added.

For example, the electronic device 100 may be a device that includes a touch display, such as a smart phone, and is easy for a user to register as the device constituting the IoT network, and the target device 200 may be a device that is relatively less easy for a user to register as the device constituting the IoT network, such as a refrigerator and an air conditioner. However, there are no special restrictions on the types of electronic device 100 and target device 200.

The transmitting device 300 may be an access point (AP) connected to the electronic device 100, but there are no special restrictions on the type of the transmitting device 300, and may correspond to the transmitting device 300 according to the present disclosure as long as it is a device capable of transmitting a type of signal according to the present disclosure to the electronic device 100 and the target device 200.

FIG. 2 illustrates each operation of a method of determining whether to register the target device 200 as the device constituting the IoT network based on signal transmission and reception between the electronic device 100, the target device 200, and the transmitting device 300. However, first, the operation of identifying the target device 200 and the transmitting device 300 will be described.

When a request for registration is received from the target device 200, the electronic device 100 may identify the target device 200 as a device that participates in an ad hoc network. For example, the target device 200 may broadcast a request for registration, and the electronic device 100 may receive a request for registration from the target device 200. Here, the 'request for registration' refers to a request to be registered as the device constituting the IoT network, and may be transmitted in a variety of ways, such as unicasting or multicasting.

The electronic device 100 may identify one device excluding the electronic device 100 and the target device 200 as the transmitting device 300. Specifically, the electronic device 100 may identify one of a plurality of devices connected to the electronic device 100 as the transmitting device 300. For example, the electronic device 100 may identify the access point connected to the electronic device 100 as the transmitting device 300, but is not limited to thereto.

Referring to FIG. 2, the electronic device 100 may receive a request to add the device constituting an Internet of Things (IoT) network (S210). The request to add the device constituting the IoT network may be received not only based on user input, but may also be received based on the occurrence of a preset event, such as arrival of a preset cycle or reboot of the electronic device 100.

When the request to add the device constituting the IoT network is received, the electronic device 100 may configure the ad hoc network including the electronic device 100, the target device 200, and the transmitting device 300 (S220).

The electronic device 100 may configure the ad hoc network by transmitting a request for configuration of the ad hoc network to the target device 200 and the transmitting device 300. Specifically, when a request for configuration of the ad hoc network is transmitted to the target device 200 and the transmitting device 300, each of the target device 200 and the transmitting device 300 may transmit a response to the request for the configuration of the ad hoc network to the electronic device 100, so the ad hoc network may be configured. The electronic device 100 may be said to be a device that performs the role of a 'proposer' in the sense that it is a device that proposes the configuration of the ad hoc network by transmitting the request for the configuration of the ad hoc network.

Here, the 'ad hoc network' is an ad hoc network for transmitting and receiving signals (data or information) between the electronic device 100, the target device 200, and the transmitting device 300 to determine whether to register the target device 200 as the device constituting the network, and is distinguished from the IoT network configured by the registered devices.

The 'request for the configuration of the ad hoc network' may include at least one of information for identifying each of the electronic device 100, the target device 200, and the transmitting device 300, information on the type of signal received through the ad hoc network, information on a maintenance time of the ad hoc network, and information on a reception period of the signal. The information on the signal reception period may include the information on the signal reception cycle.

The information for identifying each of the electronic device 100, the target device 200, and the transmitting device 300 may include information on addresses of the addresses of the electronic device 100, the target device 200, and the transmitting device 300. The information on the type of signal received through the ad hoc network refers to the information on what signals will be transmitted and received through the ad hoc network. The information on the maintenance time of the ad hoc network refers to information on how long the ad hoc network is maintained. The information on the signal reception period refers to the information on the minimum time to transmit and receive signals through the ad hoc network.

When the ad hoc network is configured, the electronic device 100 may receive a first signal from the transmitting device 300 (S230). The electronic device 100 may acquire first information on a change pattern of the first signal (S240). Meanwhile, the electronic device 100 may receive second information on a change pattern of a second signal transmitted to the target device 200 by the transmitting device 300 from the target device 200 (S250).

As illustrated in FIG. 1, in the description of the present disclosure, the wireless signal transmitted from the transmitting device 300 to the electronic device 100 is referred to as a 'first signal', and the wireless signal transmitted from the transmitting device 300 to the target device is referred to as a 'second signal'. In addition, the first signal and the second signal may be collectively referred to as the 'wireless signals'.

Specifically, when the ad hoc network is configured, the transmitting device 300 may transmit the wireless signals to the electronic device 100 and the target device 200, respectively. The electronic device 100 may receive the first signal and acquire the first information on the change pattern of the first signal. The target device 200 may receive the second signal, acquire the second information on the change pattern of the second signal, and then transmit the acquired second information to the electronic device 100. That is, the second signal may be transmitted from the transmitting device 300 to the target device 200 while the first signal is received from the transmitting device 300, and the second information may be acquired by the target device 200.

In particular, the transmitting device 300 may transmit the wireless signals to the electronic device 100 and the target device 200, respectively, for a preset time. The transmitting device 300 may transmit the wireless signals to the electronic device 100 and the target device 200, respectively, for a preset time. Here, it is preferable that the length and cycle of the transmission time of the wireless signal are determined by taking into account the fact that as the transmission time of the wireless signal increases and the cycle becomes shorter, the amount of information on the change pattern of the wireless signal increases, the accuracy of the determination may increase but the time required for the determination may increase. The length and cycle of the wireless signal transmission time may be changed depending on the user or developer's settings.

The first information and the second information refer to the information on the change pattern of the first signal and the second signal, respectively. Here, the 'change pattern of signal' refers to a time series characteristic indicating how the signal pattern changes over time. In particular, the pattern of the signal may change based on the presence, movement, etc., of an object located between the device transmitting the signal and the device receiving the signal. In other words, the change pattern of the signal may indicate the presence and movement of the object located between the device transmitting the signal and the device receiving the signal.

In detail, the change pattern of the first signal may indicate the change in signal by the object between the transmitting device 300 and the electronic device 100, and the change pattern of the second signal may indicate the change in signal by the object between the transmitting device 300 and the target device 200. Here, the 'object' includes all objects that may change the pattern of the signal, such as people, animals, home appliances, and walls, and may include moving objects as well as objects fixed to a specific location.

The first information and the second information may include at least one of information on reception strengths of the first signal and the second signal and information on a multipath of the first signal and the second signal. In addition, the first information and the second information may further include information for identification of the target device 200 and the transmitting device 300, information on the reception period of the first signal and the second signal, and information on the operation type of the target device 200 and the transmitting device 300.

For example, the wireless signals, that is, the first signal and the second signal, may be a Wi-Fi signal or a Bluetooth signal. In addition, the wireless signal may be a Wi-Fi channel state information (Wi-Fi CSI) signal.

The Wi-Fi CSI signal refers to a signal that includes information expressing the phase and amplitude of the wireless signal in subcarrier (or subchannel) units, as well as a received signal strength indicator (RSSI). Specifically, the Wi-Fi CSI signal may include information on a CSI matrix indicating multipaths, interference situations, etc., for each subcarrier (or subchannel) of the received signal as well as amplitude, phase, frequency, timestamp, and RSSI of the received signal.

The electronic device 100 may acquire a value indicating the similarity between the change pattern of the first signal and the change pattern of the second signal based on the first information and the second information (S260). Specifically, the electronic device 100 may acquire a value indicating the similarity between the change pattern of the first signal and the change pattern of the second signal by comparing attributes indicating the change pattern of the first signal and characteristics indicating the change pattern of the second signal. For example, the electronic device 100 may calculate a cosine similarity of the first signal and the second signal, perform statistical analysis on the first signal and the second signal, or acquire a value indicating the similarity between the change pattern of the first signal and the change pattern of the second signal by analyzing the spectra of the first signal and the second signal.

The more similar the change pattern of the first signal and the change pattern of the second signal, the higher the value indicating the similarity between the change pattern of the first signal and the change pattern of the second signal, and the less similar the change pattern of the first signal and the change pattern of the second signal are, the lower the value indicating the similarity between the change pattern of the first signal and the change pattern of the second signal. Here, the fact that the change pattern of the first signal and the change pattern of the second signal are similar may refer to that the change pattern of the entire section of the first signal and the change pattern of the entire section of the second signal include similar patterns.

The fact that the change pattern of the first signal and the change pattern of the second signal include similar patterns may include the fact that, in the change pattern of the first signal and the change pattern of the second signal, similar patterns are included at corresponding times to each other and similar patterns are included at different times.

Meanwhile, the electronic device 100 may input the first information and the second information to the trained neural network model, thereby acquiring the value indicating the similarity between the change pattern of the first signal and the change pattern of the second signal. Here, when the first information and second information are input, the 'neural network model' refers to the neural network model that is trained to output the value indicating the similarity between the change pattern of the first signal and the change pattern of the second signal. For example, the neural network model may include convolutional neural networks, but there are no particular restrictions on the type of neural network included in the neural network model and the structure of the neural network model.

In particular, the electronic device 100 may input the first information and the second information according to the reception time of the first signal and the second signal to the neural network model, thereby acquiring the value indicating the similarity between the change pattern of the first signal and the change pattern of the second signal.

In addition, when the first signal and the second signal are Wi-Fi CSI signals, the electronic device 100 may input information on the CSI matrix for each subcarrier received from the first signal and the second signal at the corresponding time to the neural network model, thereby acquiring the value indicating the similarity between the change pattern of the first signal and the change pattern of the second signal.

Meanwhile, the electronic device 100 may analyze the change pattern of the first signal based on at least one of the type of the transmitting device 300 and the type of the electronic device 100, thereby acquiring the first information. For example, when the transmitting device 300 or the electronic device 100 is a type of device, which may change the pattern of the first signal, such as a cooking device that generates microwaves, by considering that the pattern of the first signal may change depending on the type of transmitting device 300 or the type of electronic device 100, the electronic device 100 may remove the influence of the type of the transmitting device 300 or the type of the electronic device 100 when analyzing the change pattern of the first signal or compensate for the change pattern of the first signal based on the influence of the type of the transmitting device 300 or the type of the electronic device 100.

When the value indicating the similarity acquired as described above is greater than or equal to the threshold value (S270-N), the electronic device 100 may end the operation. In addition, when the value indicating the similarity is greater than or equal to the threshold value, the electronic device 100 may reconfigure the ad hoc network including the target device 200 and other devices, perform the operations described above to identify whether other devices are in the same space as the electronic device 100, and determine whether to register other devices as the device constituting the IoT network. For example, the same 'space' may be a home, a company, etc., or it may also have a narrow meaning such as a specific room within the home or company.

In reconfiguring the ad hoc network, the ad hoc network may be reconfigured not only with a system in which one device transmits signals to two different devices as illustrated in FIG. 1, but also with various systems such as the systems described in FIGS. 7 to 15.

When the value indicating the similarity is greater than or equal to the threshold value (S270-Y), the electronic device 100 may identify that the target device 200 is in the same space as the electronic device 100 (S280), and register the target device 200 as the device constituting the IoT network (S290). Here, the threshold value may change depending on the user or developer's settings. The electronic device 100 may be said to be a device that acts as a 'judge' in the sense that it is a device that determines whether to register the target device 200 as the device constituting the IoT network.

In particular, when the target device 200 is in the same space as the electronic device 100, even if the pattern of the wireless signal changes due to the presence and movement of surrounding objects, people, or animals, the change pattern of the first signal and the change pattern of the second signal may be similar to a certain level or more. Therefore, when the value indicating the similarity is greater than or equal to the threshold value, the electronic device 100 may identify that the target device 200 is in the same space as the electronic device 100, and automatically register the target device 200 as the device constituting the IoT network without the user input.

The electronic device 100 may transmit the information on the target device 200 to the server that provides a platform for IoT to register target device 200 as the device constituting the IoT network. In addition, the method of registering the target device 200 may vary depending on various methods of implementing a platform for IoT, such as when the electronic device 100 manages the IoT network.

Meanwhile, when it is identified that the target device 200 is in the same space as the electronic device 100, the electronic device 100 may transmit a request to stop transmitting the wireless signal to the transmitting device 300. Specifically, when the ad hoc network is configured, the electronic device 100 may periodically receive a first signal from the transmitting device 300 during a preset reception period. When it is identified that the target device 200 is in the same space as the electronic device 100 before the preset reception period, the electronic device 100 may transmit a request not to transmit the first signal to the transmitting device 300.

The request to stop transmitting the wireless signal may include the request to stop transmitting the second signal as well as the request to stop transmitting the first signal, and may be performed under the condition that the target device 200 is identified as being in the same space as the electronic device 100 and the process of registering the target device 200 as the device constituting the IoT network is completed.

Meanwhile, when the target device 200 is registered as the device constituting the IoT network, the electronic device 100 may guide the user that the target device 200 is registered as the device constituting the IoT network and provide a message to request confirmation from the user.

According to various embodiments described above, the electronic device 100 may compare and analyze the change pattern of the signal received by the electronic device 100 and the change pattern of the signal received by the target device 200, thereby effectively performing the process of registering the target device 200 as the device constituting the IoT network.

In particular, when there is movement of an object in the space where the transmitting device 300, the electronic device 100, and the target device 200 are located while the signal is being transmitted and received, since the movement of the object is reflected in the change pattern of the signal, the electronic device 100 may compare and analyze the change pattern of the signal, thereby effectively identifying that the target device 200 is located in the same space as the electronic device 100.

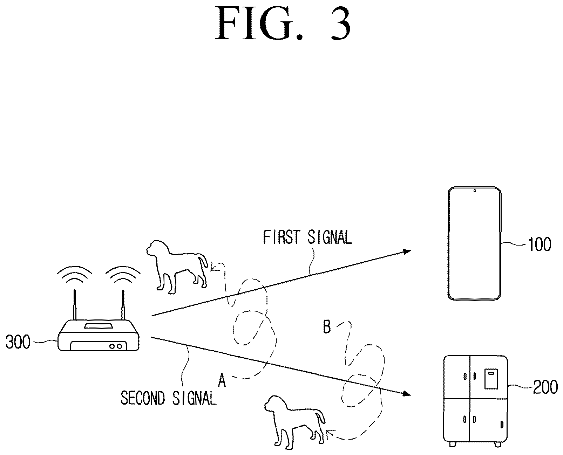

FIG. 3 is a diagram for describing one or more embodiments related to a case where an object exists in a signal transmission path.

FIG. 3 illustrates that the electronic device 100, the target device 200, the transmitting device 300, and the object are located in the same space. FIG. 3 illustrates one or more examples in which the electronic device 100 is a smart phone, the target device 200 is a refrigerator, the transmitting device 300 is an access point, and the object is a pet dog. In addition, path A and path B represent two movement paths of a pet dog together in one drawing.

Hereinafter, while the transmitting device 300 transmits the first signal and the second signal to the electronic device 100 and the target device 200, the case where the pet dog moves along the path A and the case where the dog moves along the path B will be separately described.

While the transmitting device 300 transmits the first signal and the second signal to the electronic device 100 and the target device 200, the pet dog may move along the path A. When the pet dog moves along the path A, the movement of the dog may have a similar effect on both the change pattern of the first signal and the change pattern of the second signal. Therefore, in this case, the change pattern of the entire section of the first signal and the change pattern of the entire section of the second signal may include similar patterns.

Here, the fact that the change pattern of the entire section of the first signal and the change pattern of the entire section of the second signal include similar patterns may include the fact that, in the change pattern of the first signal and the change pattern of the second signal, similar patterns are included at corresponding times to each other and similar patterns are included at different times. For example, as in path A of FIG. 3, there may be a difference between the time when the pet dog is located on the transmission path of the first signal and the time when the pet dog is located on the transmission path of the second signal. However, the pattern of the first signal changing as the pet dog is located in the transmission path of the first signal and the pattern of the second signal changing as the pet dog is located in the transmission path of the second signal may be similar to each other.

As a result, when the pet dog moves along path A while the first signal and the second signal are transmitted, the electronic device 100 may acquire the value greater than or equal to the threshold value as the value indicating the similarity between the change pattern of the first signal and the change pattern of the second signal. The electronic device 100 may identify that the target device 200 is in the same space as the electronic device 100 and register the target device 200 as the device constituting the IoT network.

Meanwhile, while the transmitting device 300 transmits the first signal and the second signal to the electronic device 100 and the target device 200, the pet dog may move along the path B. When the pet dog moves along the path B, the movement of the dog may have a different effect on both the change pattern of the first signal and the change pattern of the second signal. That is, compared to the effect of the movement of the pet dog on the change pattern of the second signal, the effect on the change pattern of the second signal may be small or not be present. Therefore, in this case, the change pattern of the first signal and the change pattern of the second signal may not include similar patterns.

As a result, when the pet dog moves along path B while the first signal and the second signal are transmitted, the electronic device 100 may acquire the value less than the threshold value as the value indicating the similarity between the change pattern of the first signal and the change pattern of the second signal. The electronic device 100 may identify that the target device 200 is not in the same space as the electronic device 100 and may not register the target device 200 as the device constituting the IoT network.

As described above by comparing the case where the pet dog moves along the path A and the case where the pet dog moves along the path B, even if the target device 200 is located in the same space as the electronic device 100, when the movement of the object located in that space is limited to a specific area, if the movement of the object is limited to a specific area, a problem may occur in which the electronic device 100 identifies that the target device 200 is not in the same space as the electronic device 100 and does not register the target device 200 as the device constituting the IoT network.

To solve this problem, the electronic device 100 may train the neural network model to acquire the value indicating the similarity using the training data including the information on various movements of the object. For example, the electronic device 100 builds various training data including the case where the movement of the object is uniform in space, such as the path A in FIG. 3, and the case where the movement of the object is biased in space, such as the path B in FIG. 3, and trains the neural network model based on the built training data. Accordingly, the electronic device 100 may more accurately identify whether the target device 200 is in the same space as the electronic device 100.

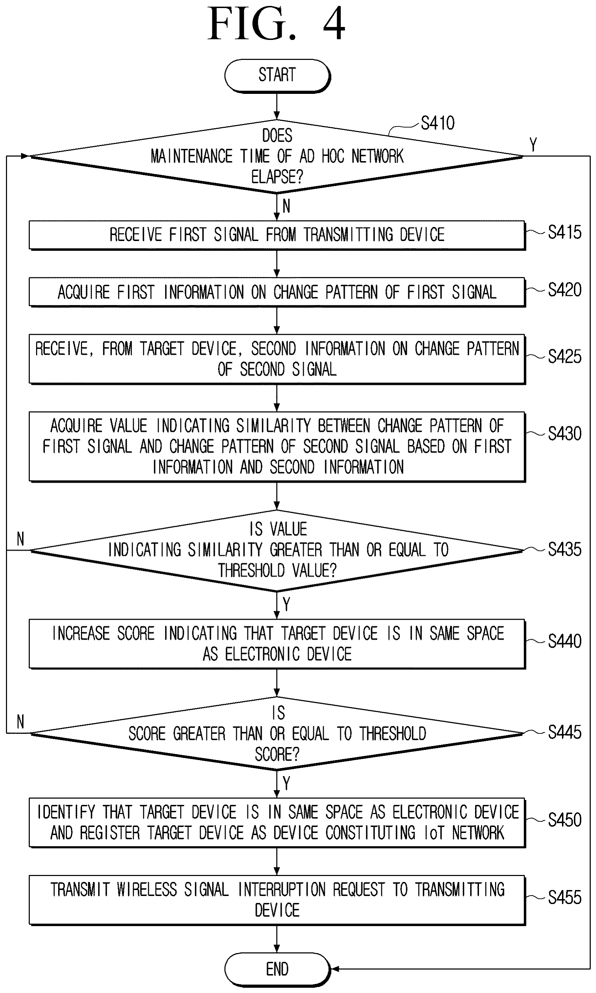

Meanwhile, the electronic device 100 may identify whether the target device 200 is in the same space as the electronic device 100 two or more times, and may more accurately identify whether the target device 200 is in the same space as the electronic device 100 by accumulating the identification results. This will be described below with reference to FIG. 4.

FIG. 4 is a flowchart for describing one or more embodiments in which the electronic device 100 identifies twice or more whether the target device 200 is in the same space as the electronic device 100.

As illustrated in FIG. 4, the electronic device 100 may identify whether the maintenance time of the ad hoc network has elapsed (S410). The maintenance time of the ad hoc network may change by the developer or user. The information on the maintenance time of the ad hoc network may be acquired before configuring the ad hoc network, and included in the request for configuring the ad hoc network and transmitted to the target device 200 and the transmitting device 300.

When the maintenance time of the ad hoc network has elapsed (S410-Y), the electronic device 100 may end the operation, and the electronic device 100 may reconfigure the ad hoc network including the target device 200 and other devices.

When the maintenance time of the ad hoc network has not elapsed (S410-N), the electronic device 100 may receive the first signal from the transmitting device 300 (S415). When the first signal is received, the electronic device 100 may acquire the first information on the change pattern of the first signal (S420). Specifically, the electronic device 100 may periodically receive the first signal from the transmitting device 300 until the maintenance time of the ad hoc network has elapsed, and may periodically acquire the first information on the change pattern of the first signal whenever the first signal is received.

The information on the reception cycle may also be included in the request for configuration of the ad hoc network and transmitted from the electronic device 100 to the transmitting device 300, and the transmitting device 300 may transmit the first signal to the electronic device 100 and transmit the second signal to the target device 200 at a preset cycle, based on the information on the reception cycle.

The electronic device 100 may receive the second information on the change pattern of the second signal from the target device 200 (S425). Specifically, the transmitting device 300 may transmit the second signal to the target device 200 at a preset cycle, and the target device 200 may acquire the second information on the change pattern of the second signal whenever the second signal is periodically received. In addition, the target device 200 may transmit the second information to the electronic device 100, so the electronic device 100 may periodically receive the second information on the change pattern of the second signal from the target device 200.

The electronic device 100 may acquire a value indicating the similarity between the change pattern of the first signal and the change pattern of the second signal based on the first information and the second information (S430). That is, when the first information and the second information corresponding to each cycle are acquired, the electronic device 100 may acquire the value indicating the similarity for each period.

The electronic device 100 may identify whether the value indicating the similarity is greater than or equal to the threshold value (S435). When the value indicating the similarity is less than the threshold (S435-N), the electronic device 100 may receive the first signal from the transmitting device 300 again until the maintenance time of the ad hoc network has elapsed (S410).

When the value indicating the similarity is greater than or equal to the threshold value (S435-Y), the electronic device 100 may increase a score indicating that the target device 200 is in the same space as the electronic device 100 (S440). Specifically, the electronic device 100 may increase the score indicating that the target device 200 is in the same space as the electronic device 100 by 1 whenever the value indicating the similarity acquired for each cycle is greater than or equal to the threshold value.

The electronic device 100 may identify whether the score is greater than or equal to the threshold score (S445). When the score is less than the threshold score (S445-N), the electronic device 100 may receive the first signal from the transmitting device 300 again until the maintenance time of the ad hoc network has elapsed (S410).

When the score is greater than or equal to the threshold score (S445-Y), the electronic device 100 may identify that the target device 200 is in the same space as the electronic device 100 and register the target device 200 as the device constituting the IoT network (S450). When the registration procedure is completed, the electronic device 100 may transmit a wireless signal interruption request to the transmitting device 300 (S455).

According to one or more embodiments as described above, even when there is a temporary error, there is temporary noise in the signal, or the movement of an object is temporarily limited to a specific area, etc., the electronic device 100 may accurately and efficiently identify whether the target device 200 is in the same space as the electronic device 100.

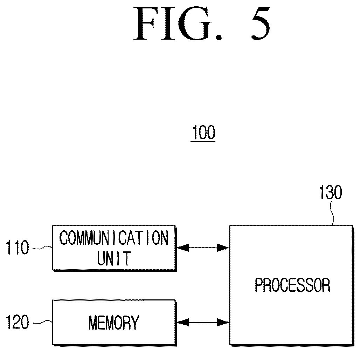

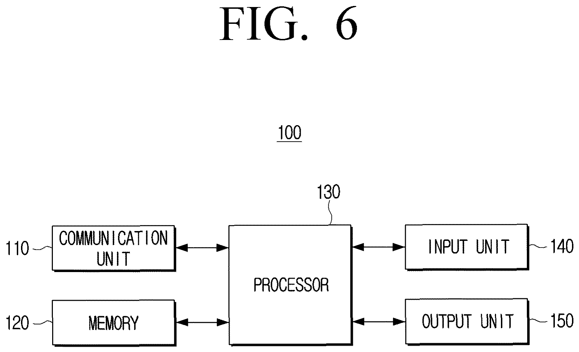

FIG. 5 is a diagram briefly illustrating the configuration of the electronic device 100 according to one or more embodiments of the present disclosure, and FIG. 6 is a diagram illustrating in detail the configuration of the electronic device 100 according to one or more embodiments of the present disclosure.

FIG. 5 is a block diagram briefly illustrating the configuration of the electronic device 100 according to one or more embodiments of the present disclosure, and FIG. 6 is a block diagram illustrating in detail the configuration of the electronic device 100 according to one or more embodiments of the present disclosure.

As illustrated in FIG. 5, the electronic device 100 according to one or more embodiments of the present disclosure may include a communication unit (communication interface) 110, a memory 120, and at least one processor 130. In addition, as illustrated in FIG. 6, the electronic device 100 according to one or more embodiments of the present disclosure may further include an input unit 140 and an output unit 150. However, the configurations illustrated in FIGS. 5 and 6 are merely exemplary, and in carrying out the present disclosure, new configurations may be added or some configurations may be omitted in addition to the configurations illustrated in FIGS. 5 and 6.

The communication unit 110 includes a circuit and may perform communication with an external device. Specifically, the processor 130 may receive various data or information from an external device connected through the communication unit 110, and may transmit various data or information to the external device.

The communication unit 110 may include at least one of a WiFi module, a Bluetooth module, a wireless communication module, an NFC module, and an ultra-wide band (UWB) module. Specifically, the WiFi module and the Bluetooth module may each perform communication using WiFi and Bluetooth methods. In the case of using the Wi-Fi module or the Bluetooth module, various connection information such as SSID, is first transmitted and received, communication is connected using the connection information, and various information may then be transmitted and received.

In addition, the wireless communication module may perform communication depending on various communication protocols such as Institute of Electrical and Electronics Engineers (IEEE), Zigbee, 3rd generation (3G), 3rd generation partnership project (3GPP), long term evolution (LTE), and 5th generation (5G). The NFC module may perform communication in an near field communication (NFC) manner using a band of 13.56MHz among various radio frequency identification (RFID) frequency bands such as 135kHz, 13.56MHz, 433MHz, 860 to 960MHz, and 2.45GHz. In addition, the UWB module may accurately measure time of arrival (ToA), which is the time for a pulse to reach a target, and angle of arrival (AoA), which is an angle of arrival of a pulse at the transmitting device 300, through communication between UWB antennas, so precise distance and position recognition is possible indoors within an error range of several tens of centimeters.

In particular, in one or more embodiments, the processor 130 may receive the first signal from the transmitting device 300 through the communication unit 110. The processor 130 may receive the second information on the change pattern of the second signal transmitted to the target device 200 by the transmitting device 300 from the target device 200. The processor 130 may receive a request for registration from the target device 200 through the communication unit 110. The processor 130 may control the communication unit 110 to transmit the request for configuration of the ad hoc network to the target device 200 and the transmitting device 300. The processor 130 may control the communication unit 110 to transmit a guidance message indicating that the target device 200 has been registered as the device constituting the IoT network and transmit a message to request user confirmation that the target device 200 is registered as the device constituting the IoT network to an external device.

At least one instruction regarding the electronic device 100 may be stored in the memory 120. The memory 120 may store an operating system (O/S) for driving the electronic device 100. In addition, the memory 120 may store various software programs or applications for operating the electronic device 100 according to various embodiments of the present disclosure. The memory 120 may include a semiconductor memory such as a flash memory, a magnetic storage medium such as a hard disk, or the like.

Specifically, various software modules for operating the electronic device 100 according to various embodiments of the present disclosure may be stored in the memory 120, and the at least one processor 130 may execute various software modules stored in the memory 120 to control the operation of the electronic device 100. That is, the memory 120 may be accessed by the processor 130, and the reading/recording/correction/deletion/update, and the like, of data may be performed by the processor 130.

Meanwhile, in the present disclosure, the term 'memory 120' includes the memory 120, a read only memory (ROM) in the processor 130, a random access memory (RAM), or a memory card (for example, a micro secure digital (SD) card or a memory stick) mounted in the electronic device 100.

In particular, in one or more embodiments, the memory 120 may store various information such as the information on the target device 200, the information on the transmitting device 300, the information on the first signal, the information on the second signal, the first information on the change pattern of the first signal, the second information on the change pattern of the second signal, the value indicating the similarity between the change pattern of the first signal and the change pattern of the second signal, and the information on the neural network model.

In addition, various pieces of information necessary within the scope for achieving the object of the present disclosure may be stored in the memory 120, and the information stored in the memory 120 may be updated as received from an external device or input by a user.

The processor 130 may control the overall operation of the electronic device 100. Specifically, the processor 130 is connected to the components of the electronic device 100 including the communication unit 110, the memory 120, the input unit 140, and the output unit 150, and may generally control the operation of the electronic device 100 by executing at least one instruction stored in the memory 120 as described above.

The processor 130 may be implemented in various schemes. For example, the processor 130 may be implemented by at least one of, an application specific integrated circuit (ASIC), an embedded processor, a microprocessor, a hardware control logic, a hardware finite state machine (FSM), and a digital signal processor (DSP). Meanwhile, in the present disclosure, the term processor 130 may be used as meaning including a central processing unit (CPU), a graphic processing unit (GPU), a micro processing unit (MPU), and the like.

In particular, in one or more embodiments, when the request to add the device constituting the Internet of Things (IoT) network is received, the processor 130 may control the communication unit 110 to configure the ad hoc network including the electronic device 100, the target device 200, and the transmitting device 300. When the ad hoc network is configured, the processor 130 may receive the first signal from the transmitting device 300 through the communication unit 110. The processor 130 may acquire the first information on the change pattern of the first signal. The processor 130 may receive the second information on the change pattern of the second signal transmitted to the target device 200 by the transmitting device 300 from the target device 200 through the communication unit 110. The processor 130 may acquire the value indicating the similarity between the change pattern of the first signal and the change pattern of the second signal based on the first information and the second information. When the value indicating the similarity is greater than or equal to the threshold value, the processor 130 may identify that the target device 200 is in the same space as the electronic device 100 and register the target device 200 as the device constituting the IoT network.

Since various embodiments according to the present disclosure according to the control of the processor 130 have been described in detail with reference to FIGS. 1 to 4, duplicate description of the same content will be omitted. In addition, various embodiments described above with reference to FIGS. 7 to 15 may also be performed under the control of the processor 130.

The input unit 140 includes a circuit, and the processor 130 may receive user commands for controlling the operation of the electronic device 100 through the input unit 140. Specifically, the input unit 140 may be configured to include components such as a microphone, a camera, and a remote control signal receiving unit, etc. The input unit 140 is a touch screen, and may be implemented as the form included in the display. In particular, the microphone may receive voice signals and convert the received voice signals into electrical signals.

In particular, in one or more embodiments, the processor 130 may receive various user inputs such as such as user input for registering the electronic device 100 as the device constituting the IoT network and the user input corresponding to the request to add the device constituting the IoT network.

The output unit 150 includes a circuit, and the processor 130 may output various functions that the electronic device 100 may perform through the output unit 150. In addition, the output unit 150 may include at least one of a display, a speaker, and an indicator.

The display may output video data under the control of the processor 130. Specifically, the display may output videos pre-stored in the memory 120 under the control of the processor 130. In particular, the display according to one or more embodiments of the present disclosure may display a user interface stored in the memory 120. The display may be implemented as a liquid crystal display panel (LCD), organic light emitting diodes (OLED), etc., and in some cases, the display may also be implemented as a flexible display, a transparent display, etc. However, the display according to the present disclosure is not limited to a specific type.

The speaker may output audio data under the control of the processor 130, and the indicator may light up under the control of the processor 130.

In particular, in one or more embodiments, the processor 130 may control the output unit 150 to output a guidance message indicating that the target device 200 has been registered as the device constituting the IoT network and transmit a message to request user confirmation that the target device 200 is registered as the device constituting the IoT network to an external device.

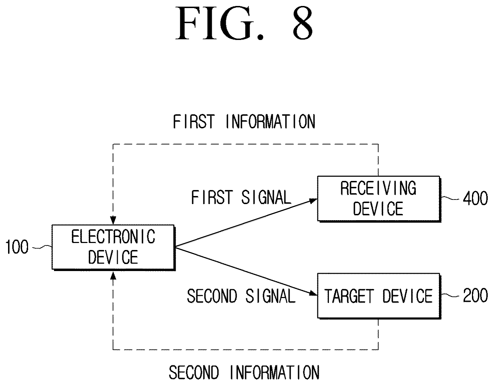

FIGS. 7 and 8 are diagrams for describing various embodiments related to one device transmitting a signal to two different devices.

The description of FIGS. 1 to 6 is made on the premise that the transmitting device 300 transmits the first signal to the electronic device 10 and the second signal to the target device 200, and the electronic device 100 acquires the first information, receives the second information from the target device 200, and then determines whether to register the IoT network for the target device 200 based on the first information and the second information.

Specifically, the embodiment described with reference to FIGS. 1 to 6 relates to one or more embodiments in which one device transmits a signal to two different devices, and the transmitting device 300 transmits a signal and the electronic device 100 and the target device 200 may receive a signal from the transmitting device 300. However, the present disclosure is not limited to the above premise, and may be implemented in various ways depending on the roles of devices participating in embodiments according to the present disclosure.

As illustrated in FIG. 7, the target device 200 may transmit the signal, and the electronic device 100 and the receiving device 400 may receive the signal from the target device 200. The electronic device 100 may receive the second information from the receiving device 400, and then determine whether to register the IoT network for the target device 200 based on the first information and the second information.

The 'receiving device 400' refers to a device that may receive a signal from other devices. Specifically, the receiving device 400 may receive the signal from the transmitting device 300, the target device 200, or the electronic device 100. The transmitting device 300 is a device that constitutes the IoT network and may be a registered device or an unregistered device. There are no special restrictions on the type of receiving device 400.

As illustrated in FIG. 8, the electronic device 100 may transmit the first signal and the second signal to the receiving device 400 and the target device 200, respectively. The electronic device 100 may receive the first information from the receiving device 400, receive the second information from the target device 200, and then determine whether to register the IoT network for the target device 200 based on the first information and the second information.

Meanwhile, the above embodiments are described on the premise that all the device (i.e., helper) that helps the onboarding process of the target device 200, the device (i.e., proposer) that proposes the configuration of the ad hoc network, and the device (i.e., judge) that determines whether to register the target device 200 as the device constituting the IoT network are the electronic devices 100, but it goes without saying that the role of at least one of the helper, the proposer, and the judge may be performed by the target device 200, the transmitting device 300, or the receiving device 400.

In the example of FIG. 7, the receiving device 400 may receive the first information from the electronic device 100, and then determine whether to register the IoT network for the target device 200 based on the first information and the second information. In addition, in the example of FIG. 8, the receiving device 400 may receive the second information from the target device 200 and then determine whether to register the IoT network for the target device 200 based on the first information and the second information. That is, the receiving device 400 may perform the role of the helper and the judge.

In addition, in the example of FIG. 7, the target device 200 may receive the first information from the electronic device 100, receive the second information from the receiving device 200, and then determine whether to register the IoT network for the target device 200 based on the first information and the second information. In the example of FIG. 8, the target device 200 may receive the first information from the receiving device 400, and then determine whether to register the IoT network for the target device 200 based on the first information and the second information. That is, the target device 200 may perform the role of the judge. In addition, various other embodiments are possible.

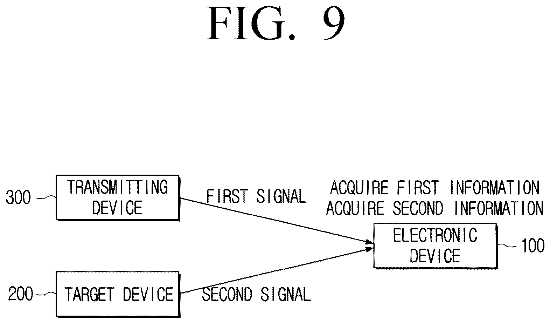

FIGS. 9 to 11 are diagrams for describing various embodiments related to transmitting signals from two different devices to one device.

In the description of FIGS. 1 to 8, various embodiments in which one device transmits signals to two different devices have been described. However, as illustrated in FIGS. 9 to 11, it may be determined whether to register the target device 200 in the IoT network based on two different devices transmitting signals to one device.

As illustrated in FIG. 9, the transmitting device 300 may transmit the first signal to the electronic device 100, and the target device 200 may transmit the second signal to the electronic device 100. The electronic device 100 may acquire the first information and the second information, and then determine whether to register the IoT network for the target device 200 based on the first information and the second information.

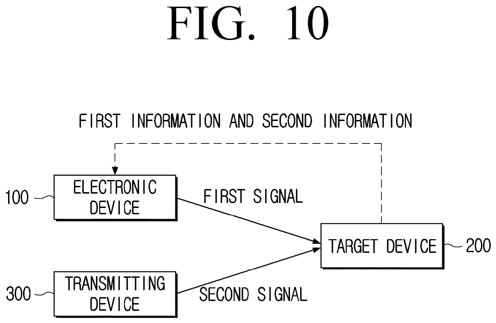

As illustrated in FIG. 10, the electronic device 100 may transmit the first signal to the target device 200, and the transmitting device 300 may transmit the second signal to the target device 200. The electronic device 100 may receive the first information and the second information from the target device 400, and then determine whether to register the IoT network for the target device 200 based on the first information and the second information.

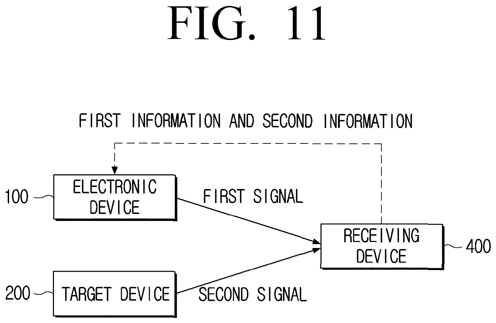

As illustrated in FIG. 11, the electronic device 100 may transmit the first signal to the receiving device 400, and the target device 200 may transmit the second signal to the receiving device 400. The electronic device 100 may receive the first information and the second information from the receiving device 400, and then determine whether to register the IoT network for the target device 200 based on the first information and the second information.

Meanwhile, as described above in the description of FIGS. 7 and 8, in the examples of FIGS. 9 to 11, the role of at least one of the helper, proposer, and judge may be performed by not only the electronic device 100, but also by the target device 200, the transmitting device 300, or the receiving device 400.

In the example of FIG. 9, when a request for registration is received from the target device 200, the transmitting device 300 may identify the target device 200 as a device that participates in an ad hoc network. In addition, the transmitting device 300 may identify one of the plurality of devices connected to the transmitting device 300, particularly the electronic device 100, which is the device registered as the device constituting the IoT network, as the device that participates in the ad hoc network. The transmitting device 300 may transmit the request for configuring the ad hoc network to the electronic device 100 and the target device 200, thereby configuring the ad hoc network. In other words, the transmitting device 300 may perform the role of the proposer.

In the example of FIG. 10, the target device 200 may transmit the first information and the second information to the transmitting device 300 without transmitting the first information and the second information to the electronic device 100. The transmitting device 300 may determine whether to register the IoT network for the target device 200 based on the first information and the second information. In other words, the transmitting device 300 may also perform the role of the judge.

In the example of FIG. 11, the receiving device 400 may not transmit the first information and the second information to the electronic device 100, and then determine whether to register the IoT network for the target device 200 based on the first information and the second information. That is, the receiving device 400 may perform the role of the judge. In addition, various other embodiments are possible.

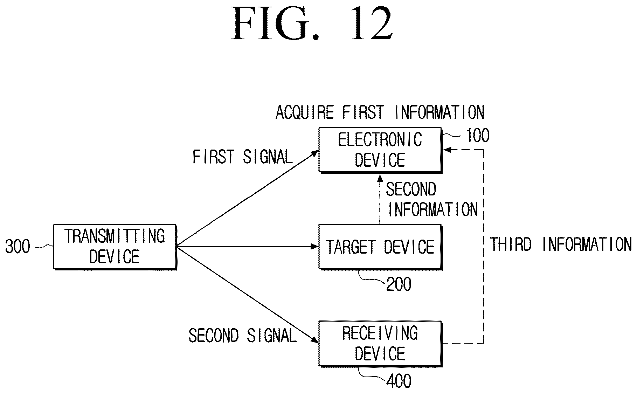

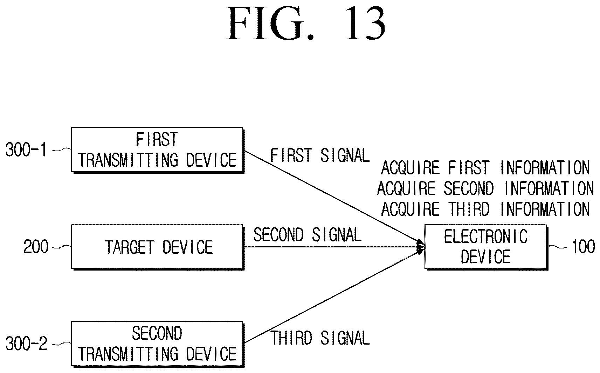

FIG. 12 is a diagram illustrating various embodiments in which one device transmits the signal to three different devices, and FIG. 13 is a diagram illustrating various embodiments in which three different devices transmit the signal to one device.

As illustrated in FIG. 12, the transmitting device 300 may transmit the first signal, the second signal, and the third signal to the electronic device 100, the target device 200, and the receiving device 400, respectively. The electronic device 100 may acquire the first information, receive the second information and the third information from the target device 200 and the receiving device 400, respectively, and then determine whether to register the IoT network for the target device 200 based on the first information and the second information and the third information.

The third information refers to the information on the change pattern of the third signal, and may indicate how the pattern of the signal changes over time, like the first information and the second information.

As illustrated in FIG. 13, a first transmitting device 300-1, a target device 200, and a second transmitting device 300-2 may each transmit the first signal, the second signal, and the third signal to the electronic device 100. The electronic device 100 may acquire the first information, the second information, and the third information, and then determine whether to register the IoT network for the target device 200 based on the first information, the second information and the third information.

In the above, determining whether to register the IoT network for the target device 200 based on the first information, the second information, and the third information refers to that the information on the change patent of the second signal received by the target device 200 is compared with the information on the change pattern of the first signal and the information on the change pattern of the third signal to determine whether to register the IoT network.

Specifically, the electronic device 100 may acquire the first value indicating the similarity between the change pattern of the first signal and the change pattern of the second signal based on the first information and the second information. The electronic device 100 may acquire the second value indicating the similarity between the change pattern of the second signal and the change pattern of the third signal based on the second information and the third information.

Only when both the first value and the second value are greater than or equal to the first threshold value, the electronic device 100 may identify that the target device 200 is in the same space as the electronic device 100, and register the target device 200 as the device constituting the IoT network. Meanwhile, when the sum of the first value and the second value is greater than or equal to the second threshold value, the electronic device 100 may identify that the target device 200 is in the same space as the electronic device 100, and register the target device 200 as the device constituting the IoT network.

Meanwhile, the embodiment is possible in which the electronic device 100 receives the second information from the target device 200 and then acquires the first value indicating the similarity between the change pattern of the first signal and the change pattern of the second signal, the receiving device 400 receives the second information from the target device 200 and then acquires the second value indicating the similarity between the change pattern of the second signal and the change pattern of the third signal, and the electronic device 100 receives the second value from the receiving device 400. In this way, by distributing part of the role of the judge to the electronic device 100 and the receiving device 400, the computational load may be distributed to several devices, particularly when acquiring the similarity value using the neural network model.

Meanwhile, even in the example of FIGS. 12 and 13, the role of at least one of the helper, proposer, and judge may be performed by not only the electronic device 100, but also by the target device 200, the transmitting device 300, or the receiving device 400.

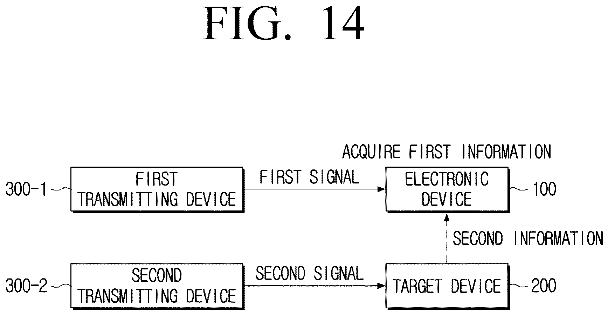

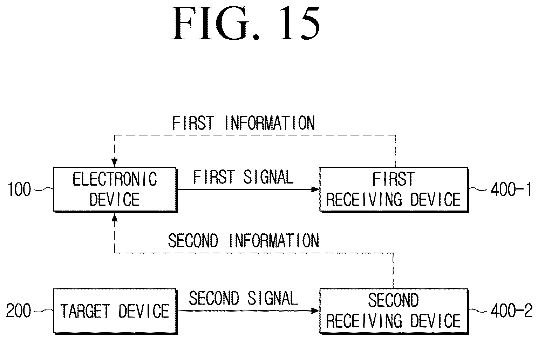

FIGS. 14 and 15 are diagrams for describing one or more embodiments related to transmitting signals from two different devices to two different devices.

In the above, one or more embodiments related to the case where the transmitting device 300 is one device or the receiving device 400 is one device has been described, but as illustrated in FIGS. 14 and 15, the embodiment according to the present disclosure may be applied even when there are two or more transmitting devices 300 or two or more receiving devices 400.

As illustrated in FIG. 14, the first transmitting device 300-1 may transmit the first signal to the electronic device 100, and the second transmitting device 300-2 may transmit the second signal to the target device 200. The electronic device 100 may acquire the first information and receives the second information from the target device 200, and then determine whether to register the IoT network for the target device 200 based on the first information and the second information.

As illustrated in FIG. 15, the electronic device 100 may transmit the first signal to a first receiving device 400-1, and the target device 200 may transmit the second signal to a second receiving device 400-2. The electronic device 100 may receive the first information from the first receiving device 400-1, receive the second information from the second receiving device 400-2, and then determine whether to register the IoT network for the target device 200 based on the first information and the second information.

Even in FIGS. 12 and 13, the role of at least one of the helper, proposer, and judge may be performed not only by the electronic device 100, but also by the target device 200, the first transmitting device 300-1, the second transmitting device 300-2, the first receiving device 400-1, or the second receiving device 400-2.

In the above description, with reference to FIGS. 7 to 15, various embodiments of the combination and role of devices for determining whether to register the IoT network for the target device 200 have been described. However, this is only an example, and various embodiments other than the above-described embodiments are possible.

Meanwhile, when identifying the device to determine whether to register the IoT network for the target device 200, the locations of devices pre-registered in the IoT network may be considered. In the example of FIG. 15, the electronic device 100 may determine the first receiving device 400-1 and the second receiving device 400-2, which have been identified as being in the same space as the electronic device 100 in the previous registration process, among the plurality of registration devices as the device that participates in the ad hoc network to determine whether to register the IoT network.

Meanwhile, the controlling method of the electronic device 100 according to the above-described embodiment may be implemented as a program and provided to the electronic device 100. In particular, a program including the controlling method of the electronic device 100 may be provided by being stored in a non-transitory computer readable medium.

Specifically, in a non-transitory computer-readable recording medium including a program executing a controlling method of an electronic device 100, the controlling method of the electronic device 100 may include configuring the ad hoc network including the electronic device 100, the target device 200, and the transmitting device 300 when receiving the request to add the device constituting the Internet of Things (IoT) network is received, receiving the first signal from the transmitting device 300 when the ad hoc network is configured, acquiring first information on a change pattern of the first signal, receiving the second information on the change pattern of the second signal transmitted to the target device 200 by the transmitting device 300, from the target device 200, acquiring the value indicating the similarity between the change pattern of the first signal and the change pattern of the second signal based on the first information and the second information, and identifying that the target device 200 is in the same space as the electronic device 100 and registering the target device 200 as the device constituting the IoT network, when the value indicating the similarity is greater than or equal to the threshold value.

In the above description, the controlling method of the electronic device 100 and the computer-readable recording medium including the program for executing the controlling method of the electronic device 100 have been briefly described, but this is only for omitting redundant description, and it goes without saying that various embodiments of the electronic device 100 are also applicable to the computer-readable recording medium including the controlling method of the electronic device 100 and the program for executing the controlling method of the electronic device 100.

According to various embodiments described above, the electronic device 100 may compare and analyze the change pattern of the signal received by the electronic device 100 and the change pattern of the signal received by the target device 200, thereby effectively performing the process of registering the target device 200 as the device constituting the IoT network.

Functions related to artificial intelligence according to the present disclosure are operated through the processor and memory of the electronic device 100.

The processor may be configured of one or a plurality of processors. In this case, one or more processors may include at least one of a central processing unit (CPU), a graphics processing unit (GPU), and a neural processing unit (NPU), but are not limited to the examples of the processors described above.

The CPU is a general-purpose processor that may perform not only general operations but also artificial intelligence operations, and may efficiently execute complex programs through a multi-layer cache structure. The CPU is advantageous for a serial processing method, which allows organic connection between previous and next operation results through sequential operations. The general-purpose processor is not limited to the above-described examples, except where specified as the above-described CPU.

The GPU is a processor for large-scale operations such as floating-point operations used in graphics processing, and may perform the large-scale operations in parallel by integrating a large number of cores. In particular, the GPU may be more advantageous than the CPU in a parallel processing method such as a convolution operation. In addition, the GPU may be used as a co-processor to supplement the functions of the CPU. The processor for the large-scale operation is not limited to the above-described example, except for the case specified as the above-described GPU.

The NPU is a processor specialized in the artificial intelligence operations using the artificial neural network, and each layer that constitutes the artificial neural network may be implemented in hardware (e.g., silicon). In this case, the NPU is specifically designed according to the company's requirements, so it has a lower degree of freedom than the CPU or GPU, but may efficiently process the artificial intelligence operations requested by the company. Meanwhile, as the processor specialized for the artificial intelligence operations, the NPU may be implemented in various forms such as a tensor processing unit (TPU), an intelligence processing unit (IPU), and a vision processing unit (VPU). The artificial intelligence processor is not limited to the examples described above, except where specified as the NPU described above.

In addition, one or more processors may be implemented as a System on Chip (SoC). In this case, in addition to one or more processors, the SoC may further include a memory and a network interface such as a bus for data communication between the processor and memory.

When the System on Chip (SoC) included in the electronic device 100 includes the plurality of processors, the electronic device 100 may use some of the plurality of processors to perform the artificial intelligence-related operations (e.g., artificial intelligence operations related to model learning or inference). For example, the electronic device 100 may perform the artificial intelligence-related operations using at least one of the GPU, NPU, VPU, TPU, or hardware accelerator specialized for the artificial intelligence operations, such as the convolution operation and the matrix multiplication operation, among a plurality of processors. However, this is only an example, and it goes without saying that the artificial intelligence-related operations may be processed using the general-purpose processors such as the CPU.

In addition, the electronic device 100 may perform the operations on the functions related to the artificial intelligence using multi cores (e.g., dual core, quad core, etc.) included in one processor. In particular, the electronic device 100 may perform the artificial intelligence operations, such as the convolution operation and the matrix multiplication operation, in parallel using the multi-cores included in the processor.

One or a plurality of processors control to process input data according to a predefined operation rule or an artificial intelligence model stored in the memory. The predefined operation rule or the AI model is characterized by being made through training.

Here, being created through learning means that a predefined motion rule or an artificial intelligence model of a desired characteristic is created by applying a learning algorithm to a plurality of learning data. Such training may be made in the device itself in which the AI according to the present disclosure is performed, or may be made through a separate server/system.

The AI model may include a plurality of neural network layers. At least one layer has at least one weight value, and a calculation of the layers is performed based on a calculation result of a previous layer and at least one defined calculation. Examples of neural networks may include models such as a convolutional neural network (CNN), a deep neural network (DNN), a recurrent neural network (RNN), a restricted Boltzmann machine (RBM), a deep belief network (DBN), a bidirectional recurrent deep neural network (BRDNN), deep Q-networks, and a transformer, and the neural networks in the present disclosure are not limited to the above-described examples except for the case specified.

A learning algorithm is a method of training a predetermined target device (e.g., a robot) using a large number of training data so that the predetermined target device may make decisions or make predictions on its own. Examples of the learning algorithms include supervised learning, unsupervised learning, semi-supervised learning, or reinforcement learning, but are not limited to the above examples, and the learning algorithm in the present disclosure is not limited to the examples described above except where explicitly stated.

The machine-readable storage medium may be provided in a form of a non-transitory storage medium. Here, the "non-transitory storage medium" means that the storage medium is a tangible device, and does not include a signal (for example, electromagnetic waves), and the term does not distinguish between the case where data is stored semipermanently on a storage medium and the case where data is temporarily stored thereon. For example, the "non-transitory storage medium" may include a buffer in which data is temporarily stored.

According to an exemplary embodiment, the methods according to the diverse exemplary embodiments disclosed in the present document may be included and provided in a computer program product. The computer program product may be traded as a product between a seller and a purchaser. The computer program product may be distributed in the form of a machine-readable storage medium (for example, compact disc read only memory (CD-ROM)), or may be distributed (for example, download or upload) through an application store (for example, Play Store^{™}) or may be directly distributed (for example, download or upload) between two user devices (for example, smart phones) online. In a case of the online distribution, at least some of the computer program products (for example, downloadable app) may be at least temporarily stored in a machine-readable storage medium such as a memory of a server of a manufacturer, a server of an application store, or a relay server or be temporarily created.

Hereinabove, each of components (for example, modules or programs) according to various embodiments described above may include a single entity or a plurality of entities, and some of the corresponding sub-components described above may be omitted or other sub-components may be further included in the diverse embodiments. Alternatively or additionally, some components (e.g., modules or programs) may be integrated into one entity and perform the same or similar functions performed by each corresponding component prior to integration.

Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Meanwhile, the term "unit" or "module" used in the disclosure may include units configured by hardware, software, or firmware, and may be used compatibly with terms such as, for example, logics, logic blocks, components, circuits, or the like. The "unit" or "module" may be an integrally configured component or a minimum unit performing one or more functions or a part thereof. For example, the module may be configured by an applicationspecific integrated circuit (ASIC).

Various embodiments of the present disclosure may be implemented by software including instructions stored in a machine-readable storage medium (for example, a computer-readable storage medium). A machine may be an apparatus that invokes the stored instruction from the storage medium and may be operated depending on the invoked instruction, and may include the electronic device (for example, the electronic device 100) according to the disclosed embodiments.

In a case where a command is executed by the processor, the processor may directly perform a function corresponding to the command or other components may perform the function corresponding to the command under a control of the processor. The command may include codes created or executed by a compiler or an interpreter.

While the disclosure has been particularly shown and described with reference to embodiments thereof, it will be understood that various changes in form and details may be made therein without departing from the spirit and scope of the following claims.

## Claims

1. An electronic device, comprising:
a communication interface;
a memory configured to store at least one instruction; and
at least one processor configured to execute the at least one instruction to:
control the communication interface to configure an ad hoc network comprising the electronic device, a target device, and a transmitting device, based on a request to add an Internet of Things (IoT) device being received;
receive a first signal from the transmitting device through the communication interface based on the ad hoc network being configured;
acquire first information on a first change pattern of the first signal;
receive second information on a second change pattern of a second signal transmitted to the target device by the transmitting device, from the target device through the communication interface;
acquire a value indicating a similarity between the first change pattern and the second change pattern based on the first information and the second information; and
identify that the target device is in a same space as the electronic device and register the target device as the IoT device, based on the value indicating the similarity being greater than or equal to a threshold value.

2. The electronic device claimed in claim 1,
wherein the first change pattern indicates a change in signal by an object between the transmitting device and the electronic device, and
wherein the second change pattern indicates the change in signal by the object between the transmitting device and the target device.

3. The electronic device claimed in claim 1,
wherein the electronic device is pre-registered as the IoT device, and
wherein the transmitting device is an access point (AP) connected to the electronic device.

4. The electronic device claimed in claim 1, wherein the first information and the second information comprise at least one of reception strengths of the first signal and the second signal or a multipath of the first signal and the second signal.

5. The electronic device claimed in claim 1,
wherein the at least one processor is further configured to execute the at least one instruction to identify the target device as participating in the ad hoc network, based on a registration request being received from the target device through the communication interface, and
wherein the ad hoc network is configured by controlling the communication interface to transmit a request for configuration of the ad hoc network to the target device and the transmitting device.

6. The electronic device claimed in claim 1, wherein the at least one processor is further configured to execute the at least one instruction to acquire the first information by analyzing the first change pattern based on at least one of a type of the transmitting device or a type of the electronic device.

7. The electronic device claimed in claim 1, wherein the at least one processor is further configured to execute the at least one instruction to control the communication interface to transmit information on the target device to a server that provides a platform to register the target device as the IoT device.

8. The electronic device claimed in claim 1, wherein the at least one processor is further configured to execute the at least one instruction to:
based on the ad hoc network being configured, periodically receive the first signal from the transmitting device through the communication interface for a preset reception period; and
transmit a request not to transmit the first signal to the transmitting device based on it being identified that the target device is in the same space as the electronic device before the preset reception period.

9. The electronic device claimed in claim 8, wherein the at least one processor is further configured to execute the at least one instruction to:
periodically acquire the first information on the first change pattern;
periodically receive the second information on the second change pattern periodically transmitted to the target device by the transmitting device, from the target device through the communication interface;
periodically acquire the value indicating the similarity between the first change pattern and the second change pattern based on the first information and the second information;
increase a score indicating that the target device is in the same space as the electronic device based on each cycle that the value indicating the similarity is greater than or equal to the threshold value; and
identify that the target device is in the same space as the electronic device and register the target device as the IoT device, based on the score being greater than or equal to a threshold score.

10. The electronic device claimed in claim 1, wherein the at least one processor is further configured to execute the at least one instruction to input the first information and the second information to a trained neural network model to acquire the value indicating the similarity between the first change pattern and the second change pattern.

11. A controlling method of an electronic device, comprising:
configuring an ad hoc network comprising the electronic device, a target device, and a transmitting device when a request to add an Internet of Things (IoT) device is received;
receiving a first signal from the transmitting device based on the ad hoc network being configured;
acquiring first information on a first change pattern of the first signal;
receiving second information on a second change pattern of a second signal transmitted to the target device by the transmitting device, from the target device;
acquiring a value indicating a similarity between the first change pattern and the second change pattern based on the first information and the second information; and
identifying that the target device is in a same space as the electronic device and registering the target device as the IoT device, based on the value indicating the similarity being greater than or equal to a threshold value.

12. The controlling method claimed in claim 11,
wherein the first change pattern indicates a change in signal by an object between the transmitting device and the electronic device, and
wherein the second change pattern indicates the change in signal by the object between the transmitting device and the target device.

13. The controlling method claimed in claim 11,
wherein the electronic device is pre-registered as the IoT device, and
wherein the transmitting device is an access point (AP) connected to the electronic device.

14. The controlling method claimed in claim 11, wherein the first information and the second information comprise at least one of reception strengths of the first signal and the second signal or a multipath of the first signal and the second signal.

15. The controlling method claimed in claim 11, wherein the configuring of the ad hoc network comprises:
identifying the target device as a device that participates in the ad hoc network based on a registration request being received from the target device; and
configuring the ad hoc network to transmit a request for configuration of the ad hoc network to the target device and the transmitting device.
